# EUROPEAN PATENT SPECIFICATION

(11) **EP 2 319 679 B1**
(45) Date of publication and mention of the grant of the patent: **17.08.2016**
(21) Application number: 10185697.9
(22) Date of filing: 13.04.2006
(51) Int. Cl.: B29C 49/48, B29C 49/54, B29C 49/06, B29C 49/22

(54) **System and method for manufacturing blow molded containers having optimal plastic distribution**
System und Verfahren zur Herstellung blasgeformter Behälter mit optimaler Kunststoffverteilung
Système et procédé pour la fabrication de récipients moulés par soufflage dotés d'une distribution plastique optimale

(30) Priority: 15.04.2005 US 671459 P; 27.02.2006 US 362416; 07.04.2006 US 399430
(43) Date of publication of application: 11.05.2011
(62) Divisional of application: 09173607.4
(73) Proprietor: Graham Packaging Company, L.P., Lancaster, PA 17601 (US)
(72) Inventor: Kelley, Paul, Wrightsville, PA 17368 (US); Trude, Gregory A., Clarks Summit, PA 18411 (US)
(74) Representative: Lawrence, John

(56) References cited:
- EP-A1- 0 346 518
- EP-A1- 0 505 054
- WO-A1-01/12531
- JP-A- 8 244 747
- JP-A- 10 230 919
- US-A- 3 325 031

## Description

### BACKGROUND OF THE INVENTION

### Field of the Invention

The present invention relates generally to forming a blow molded container, and more particularly to a method for forming a blow molded container that increases orientation of material at a region of the blow molded container. More particularly, the present invention relates to a method for blow molding a container to be formed with deep-set, grips so that the formed container has secure grippability along with a good ergonomic feel.

### Related Art

Conventionally, a container may be manufactured through a process known as blow molding. In blow molding, a parison is received at a blow molding apparatus, and the parison is enclosed by a container mold. The blow molding apparatus inflates the parison by forcing gas into the parison which causes the parison to stretch and take the shape of the container mold. Once the parison has taken the shape of the container mold, the blow molding step is complete and the container is removed from the container mold for further processing.

One method of manufacturing containers is through a process known as stretch blow molding. In this process, a preformed parison, or preform, is prepared from a thermoplastic material, typically by an injection molding process. The preform typically includes a threaded end, which becomes the threads of the container. During stretch blow molding, the preform is positioned between two open blow mold halves. The blow mold halves close about the preform and cooperate to provide a cavity into which the preform is blown to form the container. Once the mold is closed, a gas is forced into the perform causing it to stretch and to take the shape of the mold as the plastic contacts the mold. After molding, the mold halves open to release the blow molded container.

One problem with stretch blow molding is that stretching of the plastic material may affect the performance of the container at certain areas. While the stretching of the plastic material may not cause problems for most sections of the container, it particularly affects the ability of the plastic material to form around a deep protrusion in the mold. In some applications of container manufacturing, a deep protrusion may be required to form a particular section of a container. For example, the particular sections of the container formed by an inset or deep protrusion may include the dome, sidewalls, and the base of the container. As the plastic contacts the deep protrusion of the mold, the plastic must stretch and flow around the protrusion into a recess. However, the plastic material is less able to flow and stretch around the protrusion because of the contact friction with the mold surface. Insufficient material distribution at a region, such as at the base, may affect the ability of the region to maintain its shape around the protrusion during hot filling, the strength of the region, or the ability of the container to stand on a flat surface.

In some applications of container manufacturing, a deep protrusion may be required at a particular section of a container, most often at a base or at a hand grip of the container. Deep protrusions, when located at the base of the container, are sometimes referred to as "push-ups" since the protrusions push up into the interior of the container. However, employing known techniques to manufacture containers with deep protrusions has various problems. One such problem is the orientation of the plastic material around the deep protrusion. Orientation refers to how closely the molecules in a plastic material are packed together. Orientation of plastic molecules occurs as the plastic material stretches, and the greater the material stretch, the higher the orientation. As the orientation of the plastic molecules increases, the molecules straighten and may form a crystalline structure. Typically, the higher the crystallinity of the plastic, the greater the rigidity of the plastic, which improves the structural integrity of the container. The structural integrity of the container may be important during hot fill processing as the container must be able to withstand the rigors of hot fill processing.

In a hot fill process, a product is added to the container at an elevated temperature, about 82°C, which can be near the glass transition temperature of the plastic material, and the container is capped. During hot fill processing and in the subsequent cooling, the container base may experience roll out, distortion, or deformation that can cause the container to lean or become unstable. This problem can be reduced or eliminated by increasing orientation of material in the container base.

During blow molding of a container, gas is forced into a parison which causes the parison to inflate and stretch to take the shape of the container mold. However, the parison cools as it contacts the container mold. Cooling of the parison affects its ability to stretch, and thus its ability to orient. While this may not cause problems for most sections of the container, it particularly affects the orientation of the material formed around a deep protrusion. As the parison contacts the deep protrusion, the parison must flow around the protrusion into a recess.

As the parison contacts the protrusion and cools, the parison is less able to flow around the protrusion, which affects the ability of the parison to stretch and to orient plastic material at the recess. Insufficient orientation at a region, such as at a base or at a hand grip, may affect the ability of the region to maintain its shape around the protrusion, the strength of the region, or the ability of the container to stand on a flat surface. Cooling of the parison also is known to create thick amorphous plastic sections around the protrusion, which adds excess plastic material to the container and affects the rigidity around the protrusion. The thick amorphous plastic sections add to the weight of the container, and thus the cost.

A lack of definition in the base of a container caused by the inability of the plastic to properly form at a deep protrusion is a particular problem. While this is a particular problem in the base region, similar problems exist in other regions of a container where an inset is positioned. As stated previously, these other regions formed with an inset or deep protrusion include the dome, the sidewalls, etc. of a container. These problems can exist with any forming process, such as blow molding, where material must flow around a protrusion of a mold to form an inset region of a container. This is particularly true for blow molding processes including stretch blow molding, extrusion blow molding and injection blow molding.

Some containers have deep-set grips on either side of the bottle so that a consumer can easily pick up the filled container with a firm grasp of his/her hand. When blowing deep-set grips with known blow molding processes, plastic material becomes trapped in the grip regions consequently starving other regions of the container of material. To account for this, the container weight is increased as more material is required to be used to ensure that a sufficient amount of material is provided for all parts of the container. Alternatively, design compromises are made so that the resultant thinner regions are closer to the axis of the container causing those regions to be blown with more material. However, blowing heavier containers and the resultant design constraints do not solve the problem described above.

What is needed is an improved method of forming a container with a deep-set protrusion (e.g., in the base and/or as a grip) that overcomes the shortcomings of conventional solutions that introduce additional costs, molding time, and complexity into the mold setup.

Japanese patent application publications JP10-230919 and JP8-244747, and US Patent no US3 325 031 disclose bottles having a collapsible part which allows the bottle to reduce in volume, for example for storage or transit. We are also aware of the PCT patent application published as WO01/12531, which discloses a hot-fillable wide-mouth jar having an opposed pair of collapse panels that move inwardly to accommodate vacuum-induced volumetric shrinkage of the jar. EP0 505 054 discloses a hot-fill PET container which includes opposed hand grip sections, each hand grip section having opposite bulged surfaces which can invert and collapse inwardly toward each other to accommodate internal forces tending to collapse the container sidewall inwardly due to filling of the container with liquid at an elevated temperature and subsequent cooling of the liquid.

### BRIEF SUMMARY OF THE INVENTION

The invention includes a method for forming a containere according to claim 1

The method of the invention for forming a container includes receiving a parison, enclosing the parison with a mold having a cavity, inflating the parison in the mold to form a blow molded container with a moveable region at the cavity, and repositioning the moveable region before filling said blow molded container.

The method of the invention for increasing crystallinity of a container includes inflating a parison to form a blow molded container having a moveable region, at least a portion of the moveable region protruding outward from the blow molded container, and repositioning the moveable region before filling the blow molded container.

Another aspect of the invention is to create a deep-set grip in a container that provides secure grippability along with a good ergonomic feel in the resultant container. In a preferred embodiment, the deep-set grip is achieved in a manner to maintain the overall container weight at an as minimal a weight as possible, and to allow for a wide range of design applications.

The invention also includes a container forming assembly according to claim 10 including a mold having a sidewall with a recess, and a method for making the container.

A method according to exemplary embodiments of the invention includes receiving a parison, enclosing the parison within a mold having a wall with a recess, inflating the parison into the mold to form a blow molded container where the blow molded container has a sidewall, a movable region formed at the recess that extends outward from the container, and a hinge circumscribing an interface between the sidewall and the movable region, and moving the movable region about the hinge before filling.

A container forming assembly according to an exemplary embodiment of the invention forms a container from a parison where the container has at least one movable
gripping region. The container forming assembly includes a mold adapted to form a first portion and a second portion of the at least one movable gripping region wherein the first portion is rotatable about a first hinge toward an interior of the container, the first hinge being formed at a first seam between the first portion and the container, and said second portion is rotatable about a second hinge toward the interior of the container, the second hinge being formed at a second seam between the second portion and the container, and a drive mechanism adapted to move the mold to enclose the parison during blow molding and to release the container after blow molding.

Another exemplary method according to the invention is directed to a method for increasing crystallinity of a blow molded container. This exemplary method includes inflating a parison in a mold having a wall with a recess to form a blow molded container having a movable gripping region, the movable gripping region being formed at the recess, the blow molded container having a hinge coupled to said movable gripping region, the hinge circumscribing an interface between the blow molded container and the movable gripping region; and moving the movable gripping region about said hinge toward an interior of said blow molded container before filling the blow molded container.

The container forming assembly according to another exemplary embodiment would include a first mold half forming a first movable gripping region and a second mold half forming a second movable gripping region where the second movable gripping region has hinges, rotatable portions and the structure of the first movable gripping region.

In the exemplary embodiment, each of the first and second mold halves have a recess forming a movable gripping portion forming region that includes a first surface adapted to form a first outer grip portion of the movable gripping region, a second surface adapted to form a second outer grip portion of the movable gripping region, a third surface adapted to form a first inner grip portion of the movable gripping region, a fourth surface adapted to form a second inner grip portion of the movable grip portion; and a fifth surface area adapted to form a ridge area of the movable gripping portion.

The container forming assembly of the foregoing exemplary embodiment may further have its fifth surface area positioned between the third and fourth surfaces, and wherein the third and fourth surfaces positioned adjacent to the first and second surfaces, respectively.

Further objectives and advantages, as well as the structure and function of preferred embodiments will become apparent from a consideration of the description, drawings, and examples.

### BRIEF DESCRIPTION OF THE DRAWINGS

The foregoing and other features and advantages of the invention will be apparent from the following, more particular description of a preferred embodiment of the invention, as illustrated in the accompanying drawings wherein like reference numbers generally indicate identical, functionally similar, and/or structurally similar elements.
FIG. 1 depicts an exemplary embodiment of a first stage of a container with the deep-set grip inverted, according to the present invention;
FIG. 2 depicts a cross sectional view of the exemplary container of FIG. 1 according to the present invention;
FIGs. 3A-B depict an exemplary embodiment inverting a grip of a container according to the present invention;
FIG. 4 illustrates a parison received before a mold according to an exemplary embodiment of the invention;
FIG. 5 schematically illustrates an exemplary blow molded container with a movable region according to the invention;
FIG. 6 schematically illustrates another exemplary blow molded container with a movable region being inverted prior to release from the mold on each side of the container;
FIGs. 7A-C schematically illustrate the movable region of the exemplary container being inverted after release from the mold;
FIG. 8 illustrates a mold for forming half of the container shown in FIG. 6; and
FIG. 9 shows an embodiment of the mold that can be activated to push in an outwardly protruding region toward the center of the container.

Further objectives and advantages, as well as the structure and function of exemplary embodiments will become apparent from a consideration of the description, drawings, and examples.

### DETAILED DESCRIPTION OF THE INVENTION

In one embodiment, the container has a one-piece construction and can be prepared from a monolayer plastic material, such as a polyamide, for example, nylon; a polyolefin such as polyethylene, for example, low density polyethylene (LDPE) or high density polyethylene (HDPE), or polypropylene; a polyester, for example polyethylene terephthalate (PET), polyethylene naphtalate (PEN); or others, which can also include additives to vary the physical or chemical properties of the material. For example, some plastic resins can be modified to improve the oxygen permeability. Alternatively, the container can be prepared from a multilayer plastic material. The layers can be any plastic material, including virgin, recycled and reground material, and can include plastics or other materials with additives to improve physical properties of the container. In addition to the above-mentioned materials, other materials often used in multilayer plastic containers include, for example, ethylvinyl alcohol (EVOH) and tie layers or binders to hold together materials that are subject to delamination when used in adjacent layers. A coating may be applied over the monolayer or multilayer material, for example to introduce oxygen barrier properties.

Although in an embodiment the parison can be a preform having threads at the top, the parison may also be a threadless plastic tube without departing from the scope of the invention. One example using a parison that is a plastic tube involves inserting a needle into the parison, and forcing gas through the needle to expand the plastic tube to take the shape of a mold. Additionally, any blow molding technique may be used for forming the container, including injection blow molding, stretch blow molding, or extrusion blow molding, as would be understood by those of skill in the art.

In one embodiment, the invention provides a technique for blow molding a moveable region on a container base by molding a parison material into a cavity. However, this technique may be used to form other regions of a container other than the base, such as to form at least a portion of a hand grip of a container, or to form other deep protrusions of a container. The cavity may also be located on either side mold, or on other locations in the base mold. This technique is useable on any region of a plastic container where a deep protrusion is required. The technique described herein increases the rigidity of a region having a deep protrusion, while reducing thick amorphous plastic sections around the region caused by the deep protrusion.

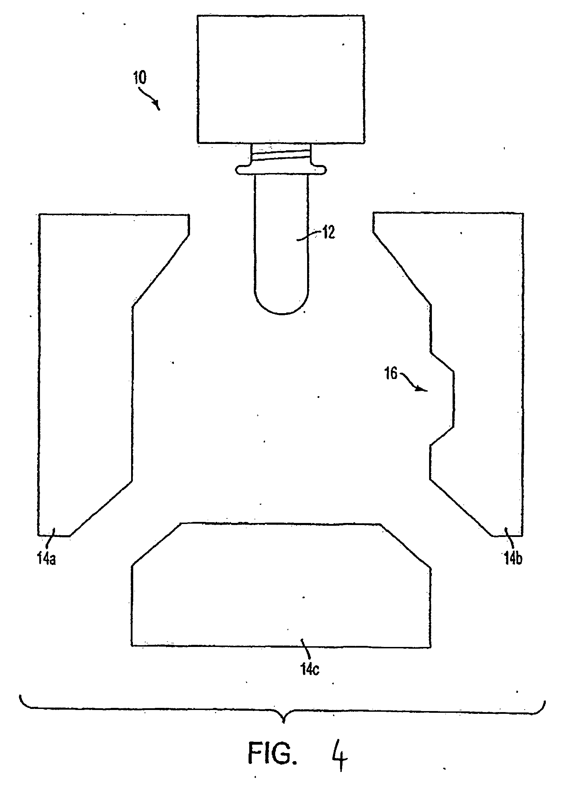

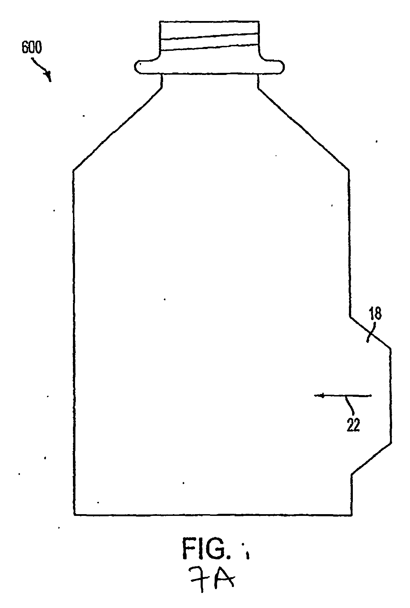

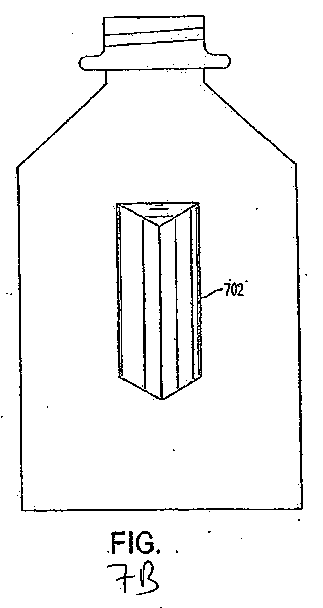

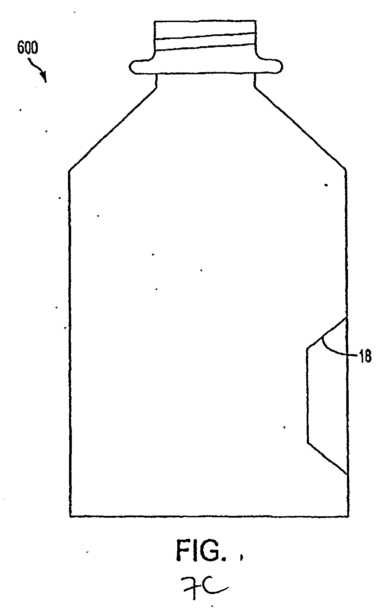

In an exemplary embodiment, as shown in FIG. 4, a blow-molding apparatus 10 may receive a parison 12 and enclose the parison with a mold 14a-c, which includes a recess 16 in the outer surface of the mold 14b. The blow-molding apparatus 10 inflates the parison into the mold to form a blow molded container 100. The blow molded container 100 has a sidewall, a movable region 18 formed at the recess 16, and a hinge circumscribing an interface, between the sidewall of container 100 and the movable region 18. The blow-molding apparatus may be adapted to move the movable region 18 about the hinge before filling the blow molded container 100. An internal volume of the blow molded container may be reduced by moving the movable region 18 into the center of the container 100 (arrow 22 in FIGs. 11 and 12A) as schematically shown in FIG. 7C. The movable region 18 forms a grip for the container 100. By blow molding the movable region 18 or grip in its outward position (outside the container) and then inverting the movable region to form the grip by using a simple mechanical force, the weight of the container may be reduced and the definition of the grip may be improved.

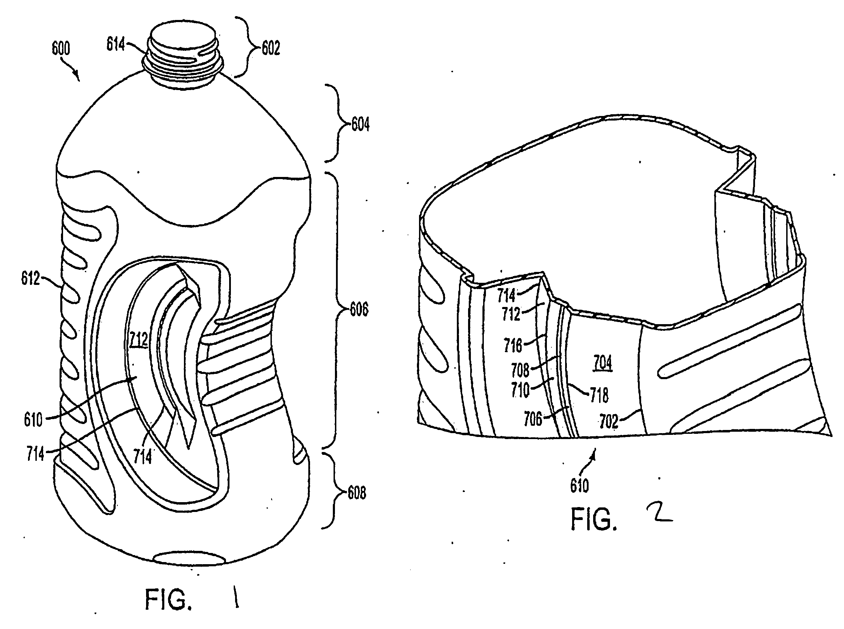

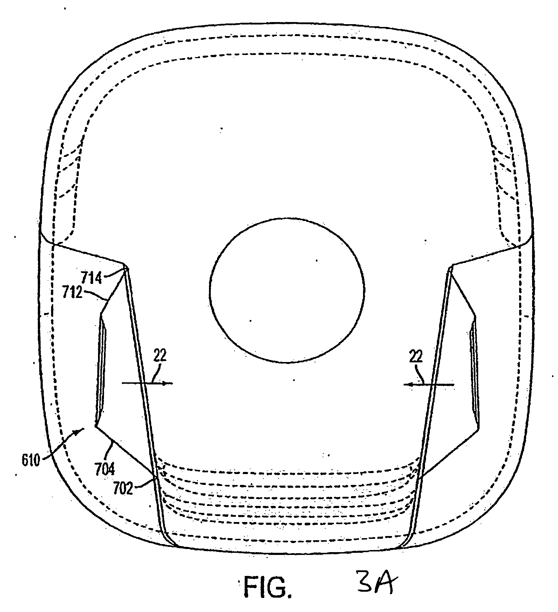

FIG. 1 illustrates an exemplary embodiment of a container representing the shape of the container as stretch blow molded according to the present invention, FIG. 2 illustrates an exemplary embodiment of a movable region of a container in its outwardly blown position according to the present invention, and FIGs. 3A-B illustrate an exemplary embodiment of the movable region of a container in its outwardly blown position and the final configuration of the grip according to the present invention, respectively.

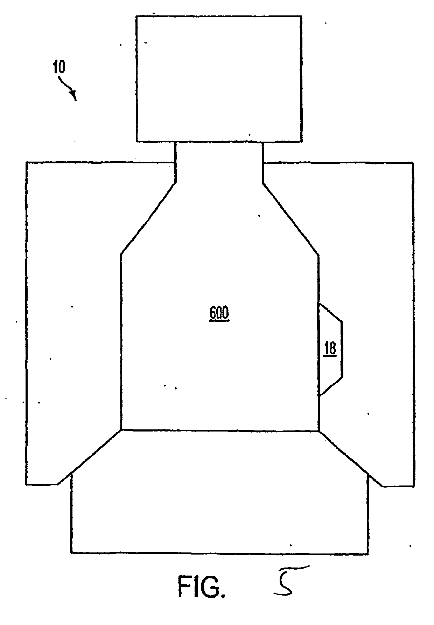

The exemplary embodiments will initially be discussed with reference to FIGs. 1-2. According to an exemplary embodiment of the present invention, container 600 is blow molded into the shape as schematically illustrated in FIG 5. FIG. 5 illustrates a perspective side view of the exemplary container 600 according to an exemplary embodiment of the present invention. As depicted, the container 600 includes an upper portion 602, a shoulder 604, a container body 606, and a base 608. The upper portion 602 of the container 600 generally is any structure having an opening into the interior of the container 600 and being adapted to receive a closure (not shown). The closure may be any device used to create a substantially air tight seal for a hot-filled product within the container 600, thus substantially preventing air from entering the container 600 through the upper portion 602. In one exemplary embodiment, the upper portion 602 includes threads 614 that are adapted to couple with a closure that is a twiston cap. The cap may be twisted onto the threads 614 of the upper portion 602 to create a seal with the container 600. In an alternative embodiment, a sealing plug may be placed in the upper portion 602 to seal the container 600. Other closures or seals may be used, as will be appreciated by those of skill in the art.

The shoulder 604 of the container 600 extends from the top of the container body 606 to the bottom of the upper portion 602. Generally, the shoulder 604 narrows as it progresses from the container body 606 to the bottom of the upper portion 602. The shoulder 604 may have any desired shape, or may be omitted from the container 600. The shoulder 604 may include patterns, shapes, and other geometries, or alternatively, may be substantially smooth. In the depicted embodiment, the width of the bottom of the shoulder 604 corresponds to the width of the top of the container body 606, and narrows by curving inward as the shoulder 604 approaches the upper portion 602. The shoulder 604 curves outward before reaching the upper portion 602, and then curves inward as the shoulder 604 reaches the upper portion 602. The shoulder 604 may be other shapes and include other patterns, as will be appreciated by those of skill in the art.

The container body 606 of the container 600 extends from the base 608 to the shoulder 604 and defines an interior of the container 600. The container body 606 is positioned below the shoulder 604. In an alternative embodiment, if the shoulder 604 is omitted from the container 600, the container body 606 extends to the upper portion 602. The container body 606 may be any asymmetrical or symmetrical shape, such as, but not limited to, cylindrical, square, rectangular, or other geometries. Optionally, the container body 606 of the container 600 may include patterned support structure or vacuum panels. The patterned support structure and the vacuum panels may help provide structural integrity for the container 600.

In the depicted embodiment, the container body 606 has ribs 612 positioned at various locations on the container 600. The ribs 612 may be a series of recessed sections alternating with non-recessed sections on the container body 606. The ribs 612 may include other types and shapes and may also be placed at alternate locations on the container body 606, as will be appreciated by those of skill in the art. The ribs 612 may also be omitted from the container body 606, or may be placed at other locations on the container 600.

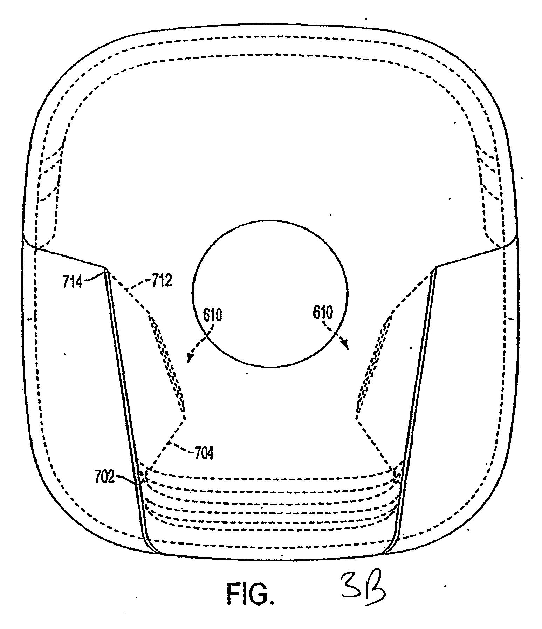

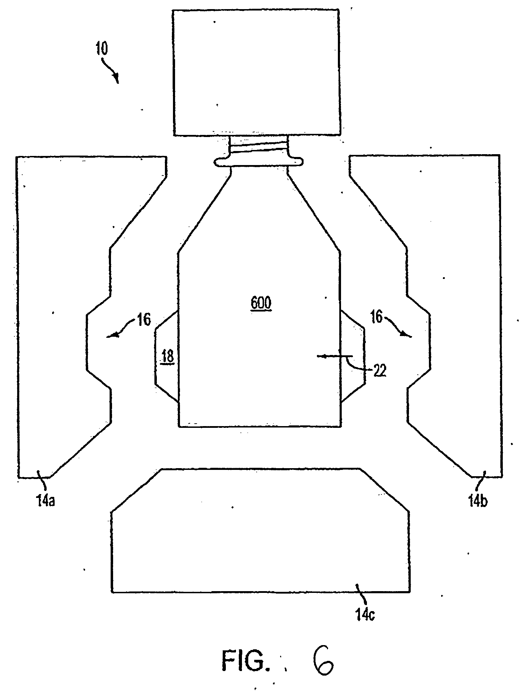

The container body 606 also includes a movable region 610 that initially is blow molded outside of the container 600 (see FIG. 6). The movable region 610 is comprised of a number of surfaces in the grip area of the container body 606. The number of surfaces are arranged in a way so that an external force (arrow 22) acting on the grip area causes the surfaces to fold in relation to one another until such a point where they snap into an inverted position toward the interior of the container 600. As depicted in FIG. 2, the movable region 610 includes a first hinge or seam 702, a first portion 704, a first inner wall 706, a second hinge or seam 714, a second portion 712, a second inner wall 710, a third hinge or seam 708, a fourth hinge or seam 716, and a fifth hinge or seam 718. The first hinge or seam 702 couples the first portion 704 so that portion 704 of the container body 606 is initially blow molded outside the container body 606 and then can be pushed inside the container as shown in Figures 3A-B, respectively. The second hinge or seam 714 couples the second portion 712 so that second portion 712 can be pushed inside the container 606 by pivoting about second hinge or seam 714. The fifth hinge or seam 718 couples the first portion 704 with the first inner wall 706, and the fourth hinge or seam 716 couples the second portion 712 with the second inner wall 710 so that these portions can be pushed inside container 606. The inverted movable region 610 is shown in Figure 3B.

The mold of the container forming assembly shown in FIGs. 4-6 may be made of first and second mold halves 14a, 14b that each may include a wall with a recess to form respective first and second movable gripping regions 610. The gripping regions 610 are initially blown outside the container and then inverted so that a consumer's hand easily fits into the inverted gripping regions.

Initially, when the container 600 is blow molded, the movable region 610 is formed extending away from the interior of the container 600. FIG. 3A illustrates the movable region 610 as blow molded extending away from the interior of the container 600, and FIG. 3B illustrates the movable region 610 extending toward the interior of the container 600 after
inversion. During inversion, a force may be applied to cause the movable region 610 to invert. As the force is applied, the first portion 704 rotates about the first hinge or seam 702 and the second portion 712 rotates about the second hinge or seam 714. Additionally, the first portion 704 rotates about the fifth hinge or seam 718 relative to the first inner wall 706, the second portion 712 rotates about the fourth hinge or seam 716 relative to the second inner wall 710, and the first inner wall 706 rotates about the third hinge or seam 708 relative to the second inner wall 710. That is, a many sided movable region 610 is initially blown outside the container thereby avoiding the need for a mold with a deep-set protrusion around which plastic material has difficulty forming the desired about the protrusion. Then, the weights of the plastic at the hinges or seams along with the angles of the first and second portions and the inner walls are designed so that movable region 610 can be inverted into the container to form a deep-set grip(s) that a consumer can securely grip and that has a good ergonomic feel to the consumer. The container wall thickness at the hinges is thinner than the surrounding portions or inner walls, which are heavier as the plastic naturally moves in this manner. The angles of the first and second portions and the inner walls should be sufficiently steep so that the desired depth of a grip is achieved and the desired ergonomic feel.

During inversion, a sufficient force may be applied to the movable region 610 formed outside the container while the container 600 remains within the mold 14a-c (see Figure 5). As the Assignee of the present invention has successfully inverted projections blown outside the base of the container, enough force needs to be applied to the movable region 610 to cause inversion. In one embodiment, the inversion of the moveable region 18 (610 in FIGs. 1-3B) may occur as late into the blowing process as possible so that the container 600 is allowed to cool as much possible before the container 600 is released or ejected from the mold. The longer the container and movable region can cool, a better inversion result can be achieved. This is because the warmer the container is during inversion, the higher the probability that the container will crease at an undesired location resulting in an aesthetically unpleasing container and thus, a rejected container. The inversion may occur just before the container is ejected or released from the mold to reduce the likelihood that the inversion will form unwanted creases or deformities in the container 600. An air cylinder (not shown) may be used for the inversion of the movable region 610 by applying a force to the first portion 704 and to second inner wall 710. Alternatively, other mechanical, pneumatic, hydraulic, or cam operated means for inverting may be used, as will be appreciated by those skilled in the art. For example, the cam operated means
may be included within the mold and the movable region may be inverted while the mold fully encloses the formed container.

The container 600 is blow molded into the shape depicted in FIG. 3A to avoid trapping material in recessed areas of a complex shaped mold and to improve the performance (less rejected containers) of the container 600 at the movable region 610 without increasing the amount of material to the region. The movable region 610 is formed into the shape shown in FIG. 3A to ensure that all surfaces of the movable region are properly formed with sufficient amounts of material and have sufficient definition. An advantage of forming the movable region 610 extending away from the interior of the container is that the rigidity at the movable region 610 is increased by allowing for further orientation of plastic material during the blow molding process (see FIGs. 1, 2, and 3A), as compared with initially forming the container with a deep-set protrusion extending toward the interior of the container (see FIG. 3B). By having the movable region 610 extend away from the interior of the container 600, the orientation of plastic material in the movable region 610 is increased since the mold would not trap material, but would allow the plastic material to further stretch into a cavity of a mold to form the movable region 610 during blow molding. As the orientation of the plastic molecules increases, the molecules straighten and may form a crystalline structure. Typically, the higher the crystallinity of the plastic, the greater the rigidity of the plastic, which improves the structural integrity of the container 600 at the movable region 610.

It is noted that if the container 600 would be initially blow molded into the shape depicted in FIG. 3B, the movable region 610 would not be fully formed at the region near the first hinge or seam 702 and near the second hinge or seam 712. This is the result of forming a container with the stretch blow molding technique. As a container is being stretch blow molded, gas stretches plastic material against a mold for the container, such as a mold for the container 600. If the mold contains a protrusion to form the movable region depicted in FIG. 3B, the plastic material would have to stretch around the protrusion from third hinge or seam 708 down to the region near the first hinge or seam 702 and near the second hinge or seam 712 (see FIG. 3B). The contact with the mold would trap material at the region near the third hinge or seam 708, and not allow the material to fully form down into the region near the first hinge or seam 702 and near the second hinge or seam 712. Moreover, forming the movable region 610 with such a protrusion would cause plastic to become trapped at the movable region 610, which
may prevent other areas of the container to not have sufficient plastic to properly form those areas.

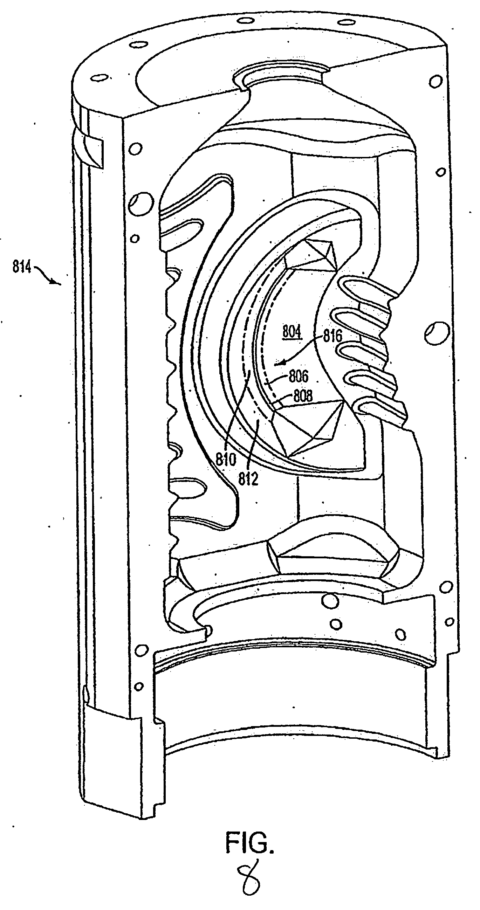

Stretch blow molding the container 600 into the shape as illustrated in FIGs. 1, 2, and 3B also reduces the wall thickness of the movable region 610 and reduces the occurrence of thick amorphous plastic sections near the movable region 610, as compared with forming the container with the movable region 610 extending outwardly from the container as depicted in FIG. 3A. This may allow the amount of plastic material present in the movable region 610 to be reduced without detrimentally affecting container performance, and, in some instances, this technique improves the performance of the movable region. Likewise, forming the container into the shape as illustrated in FIG. 8A may allow a more uniform distribution of plastic material in the base 608. Moreover, the increased rigidity may allow for the inversion of the movable region 610 without a substantial net distortion of the container body 606.

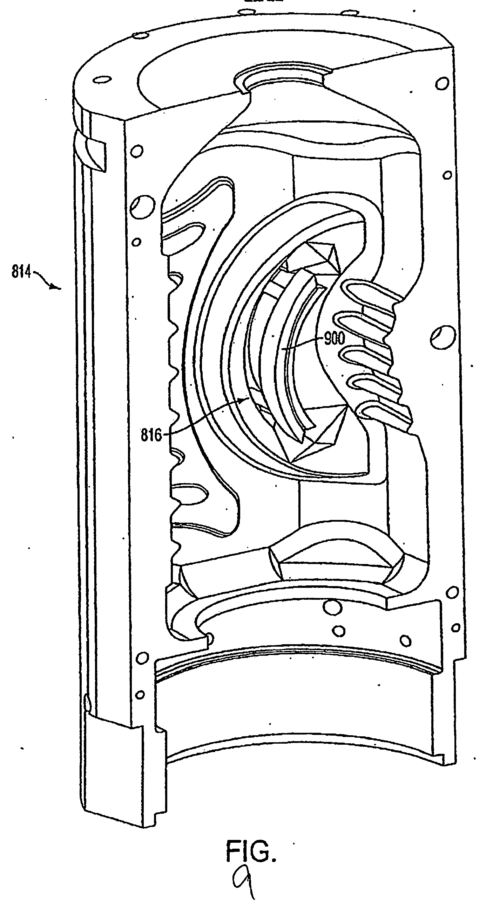

Figures 4-6 schematically illustrate a container forming assembly for forming a container from a parison according to one embodiment of the invention. The assembly includes a mold 14a, 14b, and 14c that can be driven by a drive mechanism to enclose parison 12. A container 600 is blown within the closed mold assembly, as shown in Figure 5. A recess 16 is disposed in a sidewall of mold 14a and mold 14b to form a two sided grip for a container. Figure 13 illustrates one side of the mold 814 for forming a container as shown in FIG.1 In this embodiment each side mold would include a recess 816 that has a first surface 804 adapted to form a first outer grip portion (704), a second surface 812 adapted to form a second outer grip portion (712), a third surface 806 adapted to form a first inner grip portion (706) adjacent the first outer grip portion (704), a fourth surface 810 adapted to form a second inner grip portion (710), and a fifth surface area 808 adapted to from a ridge area (708) of a movable gripping region 610. The forming assembly may include a first push rod adapted to rotate the first portion 704 of a movable region 610 about first hinge or seam 702 to invert the movable region so that it forms a gripping region. A second push rod may be employed to cause the second portion 712 to rotate about hinge or seam 714 to push both sides of the resultant gripping regions within container 600 prior to filling the container with food product. As shown in FIG. 9, a section 900 of the recess 816 that corresponds with surfaces 806 and 810 and surface area 808 is movable between the inactive position shown in FIG. 8 and the active position shown in FIG. 9.

This system also benefits from requiring less expensive components. While other systems may use complex pneumatic, hydraulic, or cam operated means to push pieces of the mold inward at a specific point in the blow molding cycle, the exemplary embodiments may use a simple mechanical means of inverting the movable region 110. This reduces the cost, molding time, and complexity of the mold set up as compared with conventional systems.

Thus, the container 600 according to exemplary embodiments of the present invention may improve the sufficient rigidity, definition, and performance of the container 600 at a movable region 610 thereby allowing a container to be formed that uses less plastic while maintaining the performance and appearance of the container.

The embodiments and examples discussed herein are non-limiting examples. The shape of the invertible inset are not limited to the examples shown, as the movable region may blown outward in a round or oval form and, when inverted, still obtain the same function - decrease the volume of the blown container.

The exemplary embodiments illustrated and discussed in this specification are intended only to teach those skilled in the art the best way known to the inventors to make and use the invention. Nothing in this specification should be considered as limiting the scope of the present invention. All examples presented are representative and non-limiting. The above-described exemplary embodiments of the invention may be modified or varied, without departing from the invention, as appreciated by those skilled in the art in light of the above teachings. It is therefore to be understood that, within the scope of the claims, the invention may be practiced otherwise than as specifically described.

## Claims

1. A method for forming a blow molded container (600) having a deep set grip and increased crystallinity, comprising:
inflating a parison (12) having a threaded upper portion in a mold (14a-c, 814) having a wall with a recess (16, 816) comprised of a plurality of surfaces (804, 812, 806, 810, 808) to form a blow molded container having a movable gripping region (610, 18) comprised of surfaces respectively corresponding to the plurality of surfaces of said recess, said movable gripping region being formed at said recess and extending into said recess, said blow molded container having a first hinge (702) coupled to said movable gripping region, said first hinge circumscribing an interface between said blow molded container and said movable gripping region; and
after said inflating, moving the movable gripping region about said first hinge toward an interior of said blow molded container before filling said blow molded container, said moving being performed by means for moving the movable gripping region, **characterised in that** after said moving of the moveable gripping region the moveable gripping region is a deep set grip, and after filling of the container remains a deep set grip configured to be grasped by consumers.

2. The method according to claim 1, further comprising releasing the container from the mold.

3. The method according to claim 2, wherein said moving step occurs before said releasing step.

4. The method according to claim 2, wherein said moving step occurs after said releasing step.

5. The method according to claim 1, wherein said movable gripping region is at a base portion (608) of the container.

6. The method according to claim 1, wherein the movable gripping region is formed of a first outer grip portion (704), a second outer grip portion (712), a first inner grip portion (706), a second inner grip portion (710), and a ridge area (708),
wherein the ridge area is arranged between the first inner grip portion and the second inner grip portion,
wherein the first inner grip portion is adjacent the first outer grip portion, and wherein the second inner grip portion is adjacent the second outer grip portion.

7. The method according to claim 1, wherein said blow molded container includes vacuum panels, each of the vacuum panels being distinct from the movable region.

8. The method according to claim 1, wherein said moving the movable gripping region causes the surfaces thereof to fold in relation to one another such that the movable gripping region is inverted to form the deep-set grip.

9. The method according to claim 1, wherein the movable gripping region includes a plurality of hinges (702, 714, 708, 716, 718), including the first hinge, for use during said moving the movable gripping region.

10. A container forming assembly (10) for forming a blow molded container (600) having a deep set grip and increased crystallinity from a parison (12), the blow molded container having a first movable gripping region (610, 18) having an outward position extending from the interior of the container, the container forming assembly comprising:
a mold (14b, 814) having a container body forming region and at least one gripping portion forming region, the at least one gripping portion forming region comprising a recess (16) having a plurality of surfaces, wherein each surface defines a portion of the gripping portion with a hinge therebetween; and
a drive mechanism adapted to move said mold to enclose the parison during blow molding and to release the blow molded container after blow molding,
**characterised in that** a portion of the container forming assembly is configured and operative to move the first movable gripping region toward an interior of said blow molded container after said blow molding and before filling said blow molded container, such that after said moving of the moveable gripping region the moveable gripping region is a deep set grip, and after filling of the container remains a deep set grip configured to be grasped by consumers.

11. The container forming assembly according to claim 10, wherein said mold is further adapted to form vacuum panels.

12. The container forming assembly according to claim 10, wherein the first movable gripping region is formed at a base (608) of the container.

13. The container forming assembly according to claim 10, wherein the mold of the assembly includes a first mold half forming the first movable gripping region and a second mold half (14a) forming a second movable gripping region, said second movable gripping region having hinges, rotatable portions and the structure of the first movable gripping region.

14. The container forming assembly according to claim 13, wherein the first and second movable gripping regions are formed in the container so that a consumer's hand easily fits into the inverted gripping regions.

15. The container forming assembly according to claim 13, wherein each of said first and second mold halves comprise: a movable gripping portion forming region including: a first surface (804) adapted to form a first outer grip portion (704) of said movable gripping region; a second surface (812) adapted to form a second outer grip portion (712) of said movable gripping region; a third surface (806) adapted to form a first inner grip portion (706) of said movable gripping region; a fourth surface (810) adapted to form a second inner grip portion (710) of said movable grip portion; and a fifth surface area (808) adapted to form a ridge area (708) of said movable gripping portion.

16. The container forming assembly according to claim 15, wherein said fifth surface area is positioned between said third and fourth surfaces, and wherein said third and fourth surfaces are positioned adjacent to said first and second surfaces, respectively.

## Patentansprüche

1. Ein Verfahren zur Herstellung eines blasgeformten Behälters (600) mit einem tiefliegenden Griff und erhöhter Kristallinität, das Folgendes aufweist:
das Aufblasen eines Blasrohlings (12) mit einem oberen Gewindeteil in einer Form (14a-c, 814), die eine Wand mit einer Vertiefung (16, 816) hat, die wiederum eine Vielzahl von Oberflächen (804, 812, 806, 810, 808) aufweist, um einen blasgeformten Behälter mit einem beweglichen Griffbereich (610, 18) zu bilden, der Oberflächen aufweist, die jeweils der Vielzahl der Oberflächen der besagten Vertiefung entsprechen, der bewegliche Griffbereich wird dabei an der Vertiefung gebildet und erstreckt sich in diese Vertiefung hinein, der besagte blasgeformte Behälter hat ein erste Falz (702), die mit der beweglichen Griffregion verbunden ist, die erste Falz grenzt eine Schnittstelle zwischen dem blasgeformten Behälter und dem beweglichen Griffbereich ab; und
nach dem Aufblasen, die Bewegung des beweglichen Griffbereichs um die erste Falz herum ins Innere des blasgeformten Behälters vor dem Füllen des blasgeformten Behälters, diese Bewegung wird anhand der Bewegung des beweglichen Griffbereichs ausgeführt, **dadurch gekennzeichnet, dass** nach der Bewegung des beweglichen Griffbereichs der bewegliche Griffbereich ein tiefliegender Griff wird, und nach dem Füllen des Behälters ein tiefliegender Griff bleibt, der so gestaltet ist, dass er von Benutzern gegriffen werden kann.

2. Das Verfahren gemäß Anspruch 1, das darüberhinaus die Entnahme des Behälters aus der Form aufweist.

3. Das Verfahren gemäß Anspruch 2, wobei der besagte Bewegungsschritt vor dem Entnahmeschritt ausgeführt wird.

4. Das Verfahren gemäß Anspruch 2, wobei der besagte Bewegungsschritt nach dem Entnahmeschritt ausgeführt wird.

5. Das Verfahren gemäß Anspruch 1, wobei sich der bewegliche Griffbereich an einem unteren Teil (608) des Behälters befindet.

6. Das Verfahren gemäß Anspruch 1, wobei der bewegliche Griffbereich aus einem ersten Außengriff-Teil (704), einem zweiten Außengriff-Teil (712), einem ersten Innengriff-Teil (706), einem zweiten Innengriff-Teil (710) und einem Kantenbereich (708) gebildet wird,
wobei der Kantenbereich zwischen dem ersten Innengriff-Teil und dem zweiten Innengriff-Teil angeordnet ist,
wobei der erste Innengriff-Teil neben dem ersten Außengriff-Teil liegt, und wobei der zweite Innengriff-Teil neben dem zweiten Außengriff-Teil liegt.

7. Das Verfahren gemäß Anspruch 1, wobei der blasgeformte Behälter Vakuumplatten einschließt, jede dieser Vakuumplatten unterscheidet sich dabei vom beweglichen Bereich.

8. Das Verfahren gemäß Anspruch 1, wobei der besagte bewegliche Griffbereich dazu führt, dass dessen Oberflächen im Verhältnis zueinander faltbar sind, so dass sich der bewegliche Griffbereich umkehrt und den tiefliegenden Griff bildet.

9. Das Verfahren gemäß Anspruch 1, wobei der bewegliche Griffbereich eine Vielzahl von Falze (702, 714, 708, 716, 718), eingeschlossen die erste Falz, für die Verwendung bei der Bewegung des beweglichen Griffbereichs, umfasst.

10. Ein Behälter, der eine Anordnung (10) für die Herstellung eines blasgeformten Behälters (600) mit einem tiefliegenden Griff und erhöhter Kristallinität aus einem Blasrohling (12) bildet, der blasgeformte Behälter hat dabei einen ersten beweglichen Griffbereich (610, 18) mit einer nach außen gerichteten Position, die vom Inneren des Behälters verläuft, der Behälter, der die Anordnung bildet, weist Folgendes auf:
eine Form (14b, 814) mit einem behälterkörperformenden Bereich und mindestens einem griffteilbildenden Bereich, der mindestens eine griffteilbildende Bereich weist eine Vertiefung (16) mit einer Vielzahl von Oberflächen auf, wobei jede Oberfläche einen Teil des Griffteils mit einer Falz dazwischen definiert; und
ein Antriebsmechanismus, der so angepasst ist, dass er die Form bewegt, um den Blasrohling beim Blasvorgang zu umschließen und den blasgeformten Behälter nach dem Blasvorgang zu entnehmen,
**gekennzeichnet dadurch, dass** ein Teil der behälterformenden Anordnung so gestaltet und funktionsfähig ist, um den ersten beweglichen Griffbereich ins Innere des blasgeformten Behälters nach dem besagten Blasvorgang und vor dem Füllen des blasgeformten Behälters zu bewegen, so dass nach dem Bewegen des beweglichen Griffbereichs der bewegliche Griffbereich ein tiefliegender Griff ist, und nach dem Füllen des Behälters ein tiefliegender Griff bleibt, der so gestaltet ist, dass er von einem Benutzer gegriffen werden kann.

11. Die behälterformende Anordnung gemäß Anspruch 10, wobei die Form darüberhinaus so geformt ist, dass sie Vakuumplatten bilden kann.

12. Die behälterformende Anordnung gemäß Anspruch 10, wobei der erste bewegliche Griffbereich an einer Basis (608) des Behälters geformt wird.

13. Die behälterformende Anordnung gemäß Anspruch 10, wobei die Form der Anordnung eine erste Formhälfte einschließt, die den ersten beweglichen Griffbereich bildet, und eine zweite Formhälfte (14a), die einen zweiten beweglichen Griffbereich bildet, der besagte zweite bewegliche Griffbereich hat dabei Falze, drehbare Teile und die Struktur des ersten beweglichen Griffbereichs.

14. Die behälterformende Anordnung gemäß Anspruch 13, wobei der erste und zweite bewegliche Griffbereich im Behälter gebildet werden, so dass eine Hand eines Benutzers leicht in die umgekehrten Griffbereiche passt.

15. Die behälterformende Anordnung gemäß Anspruch 13, wobei die erste und zweite Formhälfte Folgendes aufweisen: einen den beweglichen Griffteil bildenden Bereich einschließlich: einer ersten Oberfläche (804), die so angepasst ist, dass sie einen ersten Außengriff-Teil (704) des besagten beweglichen Griffbereichs bildet; einer zweiten Oberfläche (812), die so angepasst ist, dass sie einen zweiten Außengriff-Teil (712) des besagten beweglichen Griffbereichs bildet, einer dritten Oberfläche (806), die so angepasst ist, dass sie einen ersten Innengriff-Teil (706) des besagten beweglichen Griffbereichs bildet; einer vierten Oberfläche (810), die so angepasst ist, dass sie einen zweiten Innengriff-Teil (710) des besagten beweglichen Griffbereichs bildet; und eines fünften Oberflächenbereichs (808), der so angepasst ist, dass er einen Kantenbereich (708) des besagten beweglichen Griffteils bildet.

16. Die behälterformende Anordnung gemäß Anspruch 15, wobei der fünfte Oberflächenbereich zwischen der dritten und der vierten Oberfläche positioniert ist, und wobei die dritte und vierte Oberfläche neben der ersten bzw. zweiten Oberfläche positioniert sind.

## Revendications

1. Un procédé de formation d'un récipient moulé par soufflage (600) possédant un élément de préhension ancré profondément et une cristallinité accrue, comprenant :
le gonflage d'une paraison (12) possédant une partie supérieure filetée dans un moule (14a-c, 814) possédant une paroi avec un évidement (16, 816) composé d'une pluralité de surfaces (804, 812, 806, 810, 808) de façon à former un récipient moulé par soufflage possédant une zone de préhension mobile (610, 18) composée de surfaces correspondant respectivement à la pluralité de surfaces dudit évidement, ladite zone de préhension mobile étant formée au niveau dudit évidement et s'étendant dans ledit évidement, ledit récipient moulé par soufflage possédant une première charnière (702) couplée à ladite zone de préhension mobile, ladite première charnière circonscrivant une interface entre ledit récipient moulé par soufflage et ladite zone de préhension mobile, et
après ledit gonflage, le déplacement de la zone de préhension mobile autour de ladite première charnière vers un intérieur dudit récipient moulé par soufflage avant le remplissage dudit récipient moulé par soufflage, ledit déplacement étant exécuté par le biais du déplacement de la zone de préhension mobile, **caractérisé en ce que**, après ledit déplacement de la zone de préhension mobile, la zone de préhension mobile est un élément de préhension ancré profondément, et après le remplissage du récipient demeure un élément de préhension ancré profondément configuré de façon à être saisi par des consommateurs.

2. Le procédé selon la Revendication 1, comprenant en outre la libération du récipient du moule.

3. Le procédé selon la Revendication 2, où ladite opération de déplacement a lieu avant ladite opération de libération.

4. Le procédé selon la Revendication 2, où ladite opération de déplacement a lieu après ladite opération de libération.

5. Le procédé selon la Revendication 1, où ladite zone de préhension mobile se situe au niveau d'une partie de base (608) du récipient.

6. Le procédé selon la Revendication 1, où la zone de préhension mobile est formée d'une première partie de préhension extérieure (704), d'une deuxième partie de préhension extérieure (712), d'une première partie de préhension intérieure (706), d'une deuxième partie de préhension intérieure (710) et d'une zone de crête (708),
où la zone de crête est agencée entre la première partie de préhension intérieure et la deuxième partie de préhension intérieure,
où la première partie de préhension intérieure est adjacente à la première partie de préhension extérieure et où la deuxième partie de préhension intérieure est adjacente à la deuxième partie de préhension extérieure.

7. Le procédé selon la Revendication 1, où ledit récipient moulé par soufflage comprend des panneaux sous vide, chacun des panneaux sous vide étant distinct de la zone mobile.

8. Le procédé selon la Revendication 1, où ledit déplacement de la zone de préhension mobile amène les surfaces de celle-ci à se plier en relation les unes avec les autres de sorte que la zone de préhension mobile soit inversée de façon à former l'élément de préhension ancré profondément.

9. Le procédé selon la Revendication 1, où la zone de préhension mobile comprend une pluralité de charnières (702, 714, 708, 716, 718), comprenant la première charnière, destinées à une utilisation au cours dudit déplacement de la zone de préhension mobile.

10. Un ensemble de formation de récipient (10) destiné à la formation d'un récipient moulé par soufflage (600) possédant un élément de préhension ancré profondément et une cristallinité accrue à partir d'une paraison (12), le récipient moulé par soufflage possédant une première zone de préhension mobile (610, 18) possédant une position tournée vers l'extérieur s'étendant à partir de l'intérieur du récipient, l'ensemble de formation de récipient comprenant :
un moule (14b, 814) possédant une zone de formation de corps de récipient et au moins une zone de formation de partie de préhension, la au moins une zone de formation de partie de préhension comprenant un évidement (16) possédant une pluralité de surfaces, où chaque surface définit une partie de la partie de préhension avec une charnière entre celles-ci, et
un mécanisme d'entraînement adapté de façon à déplacer ledit moule de façon à enfermer la paraison au cours d'un moulage par soufflage et de façon à libérer le récipient moulé par soufflage après un moulage par soufflage,
**caractérisé en ce qu'**une partie de l'ensemble de formation de récipient est configurée et conçue de façon à déplacer la première zone de préhension mobile vers un intérieur dudit récipient moulé par soufflage après ledit moulage par soufflage et avant le remplissage dudit récipient moulé par soufflage, de sorte que, après ledit déplacement de la zone de préhension mobile, la zone de préhension mobile soit un élément de préhension ancré profondément, et après le remplissage du récipient, demeure un élément de préhension ancré profondément configuré de façon à être saisi par des consommateurs.

11. L'ensemble de formation de récipient selon la Revendication 10, où ledit moule est adapté en outre de façon à former des panneaux sous vide.

12. L'ensemble de formation de récipient selon la Revendication 10, où la première zone de préhension mobile est formée au niveau d'une base (608) du récipient.

13. L'ensemble de formation de récipient selon la Revendication 10, où le moule de l'ensemble comprend une première moitié de moule formant la première zone de préhension mobile et une deuxième moitié de moule (14a) formant une deuxième zone de préhension mobile, ladite deuxième zone de préhension mobile possédant des charnières, des parties pivotables et la structure de la première zone de préhension mobile.

14. L'ensemble de formation de récipient selon la Revendication 13, où les première et deuxième zones de préhension mobiles sont formées dans le récipient de sorte qu'une main de consommateur s'emboîte aisément dans les zones de préhension inversées.

15. L'ensemble de formation de récipient selon la Revendication 13, où chacune desdites première et deuxième moitiés de moule comprennent : une zone de formation de partie de préhension mobile comprenant : une première surface (804) adaptée de façon à former une première partie de préhension extérieure (704) de ladite zone de préhension mobile, une deuxième surface (812) adaptée de façon à former une deuxième partie de préhension extérieure (712) de ladite zone de préhension mobile, une troisième surface (806) adaptée de façon à former une première partie de préhension intérieure (706) de ladite zone de préhension mobile, une quatrième surface (810) adaptée de façon à former une deuxième partie de préhension intérieure (710) de ladite partie de préhension mobile et une cinquième zone de surface (808) adaptée de façon à former une zone de crête (708) de ladite partie de préhension mobile.

16. L'ensemble de formation de récipient selon la Revendication 15, où ladite cinquième zone de surface est positionnée entre lesdites troisième et quatrième surfaces, et où lesdites troisième et quatrième surfaces sont positionnées adjacentes auxdites première et deuxième surfaces, respectivement.
